# EUROPÄISCHE PATENTSCHRIFT

(11) **EP 2 410 634 B1**
(45) Veröffentlichungstag und Bekanntmachung des Hinweises auf die Patenterteilung: **12.12.2012**
(21) Anmeldenummer: 10007455.8
(22) Anmeldetag: 19.07.2010
(51) Int. Cl.: H02K 3/52

(54) **Elektrokleinmotor sowie Verfahren zur Herstellung eines Elektrokleinmotors**
Small electric motor and method for manufacturing the same
Petit moteur électrique tout comme procédé de fabrication d'un petit moteur électrique

(43) Veröffentlichungstag der Anmeldung: 25.01.2012
(73) Patentinhaber: Maxon Motor AG, 6072 Sachseln (CH)
(72) Erfinder: Ramon, David, 6372 Ennetmoos (CH); Hofstetter, Remo, 6005 Luzern (CH); Fritschy, Hugo, 6072 Sachseln (CH)
(74) Vertreter: Grünecker, Kinkeldey, Stockmair & Schwanhäusser

(56) Entgegenhaltungen:
- DE-A1- 4 447 027
- JP-A- 62 092 738

## Beschreibung

Die vorliegende Erfindung betrifft einen Elektrokleinmotor sowie ein Verfahren zur Herstellung eines solchen. Im Besonderen betrifft die vorliegende Erfindung einen Klauenpolmotor.

Viele Anwendungsgebiete für elektrische Kleinmotoren erfordern einen immer höheren Grad der Miniaturisierung. Elektromotoren müssen immer kleiner und kompakter gebaut werden, um für Anwendungen beispielsweise in der Medizintechnik geeignet zu sein. Dies erfordert besonders platzsparende Motorgehäusekonstruktionen und eine intelligente, effiziente Anordnung und Auslegung der einzelnen Motorkomponenten. Eine große Rolle spielt dabei eine optimierte Anordnung der elektrischen Verbindungen und Leiterbahnen im Motor selbst.

Aus dem Stand der Technik ist es allgemein bekannt, die elektrischen Anschlüsse der Statorwicklungen als Litzen aus dem Motorgehäuse herauszuführen. Aus DE 36 39 004 A1 ist ferner ein Klauenpolmotor mit zwei Statorwicklungen bekannt, bei welchem zur elektrischen Kontaktierung der beiden Statorwicklungen eine Leiterplatte verwendet wird. Die Leiterplatte ist ringförmig ausgebildet und zwischen den beiden Statorwicklungen angeordnet. Abzapfungen der Statorwicklungen sind mit Wicklungsanschlusskontakten auf der Leiterplatte elektrisch verbunden. Von den Wicklungsanschlusskontakten verlaufen Leiterbahnen auf der Leiterplatte zu externen Anschlusskontakten, die auf einem oder mehreren radial aus dem Gehäuse des Motors vorstehenden Vorsprüngen der Leiterplatte untergebracht sind. Diese radialen Vorsprünge der Leiterplatte sind für eine Steckverbindung mit einem elektrischen Anschlusskabel konfiguriert. In der DE 36 39 004 A1 ist ferner beschrieben, dass anstatt einer Leiterplatte auch eine Leiterfolie Einsatz finden kann, wobei Anordnung und Aufbau der Leiterfolie im Wesentlichen dem Prinzip der Leiterplatte entsprechen. Auch bei der in DE 36 39 004 A1 beschriebenen Verwendung einer Leiterfolie sind Vorsprünge der Folie, auf denen die externen Anschlusskontakte untergebracht sind, radial aus dem Motorgehäuse herausgeführt. Da die Leiterfolie zwischen den beiden Statorwicklungen des Klauenpolmotors angeordnet ist, gestaltet sich die Montage des Motors relativ kompliziert, und ist daher schwer automatisierbar. Zudem führen die radial nach außen geführten Anschlusskontakte bzw. Vorsprünge der Leiterfolie zu einem großen Bauvolumen bzw. großen Gesamtdurchmessern der Motoreinheit, da die Steckverbindungen mit den Vorsprüngen der Leiterfolie radial außerhalb des Gehäuses liegen. Zudem ist das aus DE 36 39 004 A1 bekannte Konzept relativ unflexibel und erlaubt lediglich den elektrischen Anschluss zweier Statorwicklungen über eine gemeinsame Leiterplatte bzw. Leiterfolie.

JP 62 092738 A offenbart einen Motor mit den Merkmalen des Oberbegriffs des Anspruchs 1. Aus diesem Dokument ist ein Klauenpolmotor mit zwei Statorwicklungen bekannt, dessen Stator jeweils einen Polzahnkranz pro Statorwicklung umfasst. Für den elektrischen Anschluss der Statorwicklungen ist eine flexible Leiterfolie vorgesehen, die als länglicher Streifen mit zwei beabstandet voneinander angeordneten Anschlussbereichen ausgebildet ist. Je ein Anschlussbereich der Leiterfolie ist direkt auf jeweils eine Statorwicklung aufgeklebt. Die beiden Polzahnkränze sind auf den aus Statorwicklung und Leiterfolie bestehenden Verbund aufgesetzt.

Der vorliegenden Erfindung liegt die Aufgabe zugrunde, für einen Elektrokleinmotor, insbesondere einen Klauenpolmotor, ein innovatives Konzept anzugeben, das eine einfache Herstellung und Montage des Elektrokleinmotors erlaubt und eine platzsparende Anordnung der elektrischen Verbindungen ermöglicht. Zudem soll eine kostengünstige Herstellung des Elektrokleinmotors erreicht werden.

Die Aufgabe wird gelöst durch die technischen Merkmale des unabhängigen Anspruchs 1. Demnach liegt bei einem Elektrokleinmotor mit einer Leiterfolie für den elektrischen Anschluss der Statorwicklungen, wobei die Leiterfolie als länglicher Streifen mit zumindest zwei beabstandet voneinander angeordneten Anschlussbereichen mit Wicklungsanschlusskontakten ausgebildet ist, eine erfindungsgemäße Lösung der Aufgabe vor, wenn in axialer Richtung auf der einen Seite jedes Polzahnkranzes jeweils ein Anschlussbereich der Leiterfolie und auf der anderen Seite des Polzahnkranzes jeweils eine Statorwicklung angeordnet sind, wobei die Abzapfungen der jeweiligen Statorwicklungen durch Öffnungen des Polzahnkranzes hindurch auf die Seite des zugehörigen Anschlussbereiches geführt sind.

Die Erfindung bietet den Vorteil einer äußerst einfachen Montage eines miniaturisierten Klauenpolmotors.

Durch die Ausbildung der Leiterfolie als länglicher Streifen ist die elektrische Kontaktierung mehrerer Statorwicklungen an unterschiedlichsten Positionen innerhalb oder außerhalb des Elektromotors möglich. Durch dieses äußerst flexible Konzept der Kontaktierung der Statorwicklungen lässt sich auch der Montageprozess flexibel und kostengünstig gestalten. Der flexible längliche Streifen kann beliebig durch den Elektromotor oder am Gehäuse entlang geführt werden und erlaubt somit eine optimierte Bauraumausnutzung und damit eine weitere Miniaturisierung. Die Anordnung der externen Anschlusskontakte unterliegt ferner keinen räumlichen Einschränkungen.

Weitere Ausgestaltungen der vorliegenden Erfindung sind Gegenstand der Unteransprüche.

In einer bevorzugten Ausführungsform der vorliegenden Erfindung sind die Anschlussbereiche senkrecht zur Drehachse des Rotors des Elektrokleinmotors ausgerichtet und im Wesentlichen kreisringförmig ausgebildet, wobei der Rotor von den kreisringförmigen Anschlussbereichen umschlossen ist. Dies ermöglicht eine äußerst platzsparende Anordnung der Anschlussbereiche vor, zwischen oder nach den zu kontaktierenden Statorwicklungen.

Vorzugsweise umfasst die Leiterfolie genau zwei Anschlussbereiche. Diese Ausführungsform empfiehlt sich besonders für einen miniaturisierten Klauenpolmotor mit zwei Statorwicklungen.

In radialer Ausdehnung wird im Motor selbst kein Bauraum für elektrische Verbindungen benötigt, wenn der Leiterfolienstreifen zwischen den Anschlussbereichen zumindest teilweise außen am Gehäuse entlang verläuft. Dabei wird eine weitere Optimierung der kompakten Bauweise erreicht, wenn das Gehäuse an der Außenseite jeweils eine Nut oder Abflachung zur Aufnahme des Leiterfolienstreifens aufweist.

Eine äußerst einfache und automatisierbare Montage kann gewährleistet werden, wenn das Gehäuse an beiden Enden durch einen Gehäusedeckel verschlossen ist, wobei zumindest einer der Gehäusedeckel eine kammerartige Vertiefung zur Aufnahme einer überstehenden Schlaufe des Leiterfolienstreifens aufweist.

In einer weiteren bevorzugten Ausführungsform der vorliegenden Erfindung sind die externen Anschlusskontakte an einem Ende des Leiterfolienstreifens angeordnet. Dieses Ende wird dabei vorzugsweise durch einen Schlitz in einem der beiden Gehäusedeckel in axialer Richtung aus dem Gehäuse heraus geführt. Dadurch wird eine sehr kompakte Bauweise in radialer Richtung ermöglicht, da radial außerhalb des Gehäuses bei dieser Ausführungsform im Gegensatz zum Stand der Technik keine Steckverbindungen oder dergleichen erforderlich sind.

Wenn in einer weiteren bevorzugten Ausführungsform der vorliegenden Erfindung Polyimid als Trägermaterial der Leiterfolie verwendet wird, gestaltet sich die Handhabung bei der Biegung der flexiblen Leiterfolie während der Montage äußerst einfach. Zudem werden mit Polyimid als Trägermaterial hohe Isolationswerte und Lebensdauern erreicht.

In einer weiteren bevorzugten Ausführungsform der vorliegenden Erfindung sind die Abzapfungen der Statorwicklungen mit den Wicklungsanschlusskontakten auf der flexiblen Leiterfolie verlötet. Dies gewährleistet eine sichere und langlebige Kontaktierung, die beispielsweise durch Verformung der Einzelbauteile der Motorbaugruppe aufgrund von betriebsbedingten unterschiedlichen Erwärmungen nicht beeinträchtigt wird.

Die Montage kann dabei nochmals vereinfacht werden, wenn Anschlussbereiche und Statorwicklungen mit dem jeweils zugehörigen Polzahnkranz verklebt sind. Dadurch wird auf kostengünstige Art und Weise ein äußerst sicherer Zusammenhalt der genannten Komponenten erreicht. Vorzugsweise erfolgt die Verklebung vor dem Einbau der Statorwicklungen in das Gehäuse. Somit lässt sich der Zusammenhalt zwischen Polzahnkranz und jeweils zugehöriger Statorwicklung und zugehörigem Anschlussbereich auf einfache Art und Weise, kostengünstig sowie vor allen Dingen automatisierbar herstellen, wobei der Zusammenhalt der genannten Bauteile den weiteren Montageprozess erheblich vereinfacht.

Im Folgenden wird ein bevorzugtes Ausführungsbeispiel der vorliegenden Erfindung anhand von Zeichnungen näher erläutert. Es zeigen:
- Fig. 1: einen Längsschnitt eines erfindungsgemäßen Elektrokleinmotors in Schrägansicht,
- Fig. 2: den erfindungsgemäßen Elektrokleinmotor aus Fig. 1 im Längsschnitt ohne Darstellung des Rotors und des linksseitigen Gehäusedeckels,
- Fig. 3: die flexible Leiterfolie des erfindungsgemäßen Elektrokleinmotors aus den Figuren 1 und 2 im abgewickelten Zustand vor der Montage, und
- Fig. 4: den Längsschnitt aus Fig. 1 in Explosionsdarstellung.

Für die folgenden Ausführungen gilt, dass gleiche Teile durch gleiche Bezugszeichen bezeichnet sind.

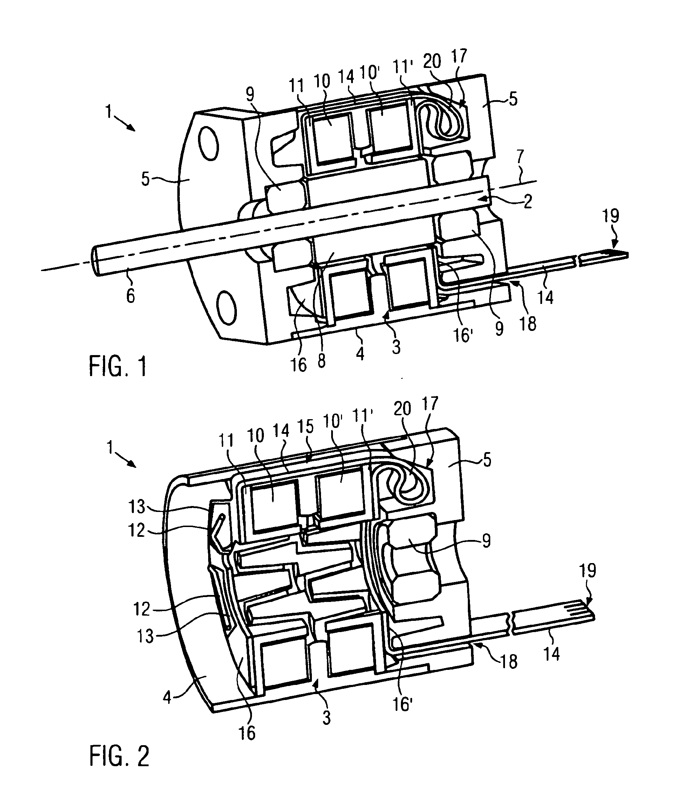

Der in Fig. 1 dargestellte erfindungsgemäße Elektrokleinmotor 1 ist nach Art eines Klauenpolmotors aufgebaut und umfasst einen Rotor 2, einen Stator 3 sowie ein fest mit dem Stator 3 verbundenes Gehäuse 4, welches axial an beiden Enden durch jeweils einen Gehäusedeckel 5 abgeschlossen ist. Der Stator 3 des erfindungsgemäßen Klauenpolomotors 1 umfasst zwei Statorwicklungen 10 und 10', die kreisringförmig ausgebildet und koaxial zur Drehachse 7 des Rotors 2 angeordnet sind. Die Statorwicklungen 10 und 10' sind jeweils mit einem zugehörigen Polzahnkranz 11 bzw. 11' verklebt und schließen in axialer Richtung aneinander an. Nach außen hin sind die Statorwicklungen 10 und 10' vom Gehäuse 4 umschlossen. Der Rotor 2 des erfindungsgemäßen Klauenpolmotors 1 besteht im Wesentlichen aus einem hohlzylindrischen Permanentmagneten 8 und einer vom Permanentmagneten 8 umschlossenen und mit diesem verbundenen Welle 6, die über jeweils ein Sintergleitlager 9 in den beiden Gehäusedeckeln 5 gelagert ist. Für den elektrischen Anschluss der beiden Statorwicklungen 10 und 10' ist eine flexible Leiterfolie 14 vorgesehen, die im Wesentlichen als länglicher Streifen mit zwei Anschlussbereichen 16 und 16' ausgebildet ist.

Wie insbesondere aus Fig. 2 zu erkennen ist, dient der erste Anschlussbereich 16 zum Anschluss der ersten Statorwicklung 10 und der zweite Anschlussbereich 16' zum elektrischen Anschluss der zweiten Statorwicklung 10'. Die beiden Anschlussbereiche 16 und 16' sind beide im Wesentlichen kreisringförmig ausgebildet und umschließen genauso wie Statorwicklungen 10 und 10' und zugehörige Polzahnkränze 11 und 11' den Rotor 2, der in Fig. 2 nicht dargestellt ist. Der erste Anschlussbereich 16 ist in axialer Richtung vor der Statorwicklung 10 bzw. vor dem ersten Polzahnkranz 11 angeordnet und mit dem Polzahnkranz 11 verklebt. Vom ersten Anschlussbereich 16 verläuft der längliche Streifen der flexiblen Leiterfolie 14 in einer axial verlaufenden äußeren Nut 15 des Gehäuses 4 zum zweiten Anschlussbereich 16', der in axialer Richtung nach der zweiten Statorwicklung 10' und deren zugehörigem Polzahnkranz 11' angeordnet ist. Der zweite Anschlussbereich 16' ist ebenfalls mit dem zweiten Polzahnkranz 11' verklebt. Um die Montage des erfindungsgemäßen Klauenpolmotors 1 zu ermöglichen, ist der Verbindungsstreifen der Leiterfolie 14 zwischen den beiden Anschlussbereichen 16 und 16' etwas länger als der axiale Abstand zwischen den beiden Anschlussbereichen 16 und 16'. Der dadurch entstehende überschüssige Abschnitt des länglichen Streifens ist daher im fertig montierten Zustand in Form einer Schlaufe 20 in einer Vertiefung 17 des rechten Gehäusedeckels 5 untergebracht.

Da in Fig. 2 Rotor und linksseitiger Gehäusedeckel nicht dargestellt sind, ist die Kontaktierung der ersten Statorwicklung 10 mit dem ersten Anschlussbereich 16 der flexiblen Leiterfolie 14 gut zu erkennen. Abzapfungen 12 der Statorwicklung 10 sind durch Öffnungen des Polzahnkranzes 11 hindurch geführt und auf die Wicklungsanschlusskontakte 13 des ersten Anschlussbereichs 16 gelötet. Die elektrische Kontaktierung der zweiten Statorwicklung 10' durch den zweiten Anschlussbereich 16' der flexiblen Leiterfolie 14 ist zwar nicht dargestellt, erfolgt jedoch analog. Anschließend an den zweiten Anschlussbereich 16' ist die als länglicher Streifen ausgebildete Leiterfolie 14 durch einen Schlitz 18 im rechten Gehäusedeckel 5 axial nach außen geführt. Die flexible Leiterfolie 14 benötigt somit keinerlei zusätzlichen Bauraum in radialer Richtung und ermöglicht dadurch eine sehr kompakte Bauweise. Auf dem Ende der als länglicher Streifen ausgeführten Leiterfolie 14, das durch den Schlitz 18 im Gehäusedeckel 5 nach außen geführt ist, befinden sich externe Anschlusskontakte 19, die jeweils mit einem Wicklungsanschlusskontakt 13 auf einem der beiden Anschlussbereiche 16 und 16' durch eine Leiterbahn verbunden sind.

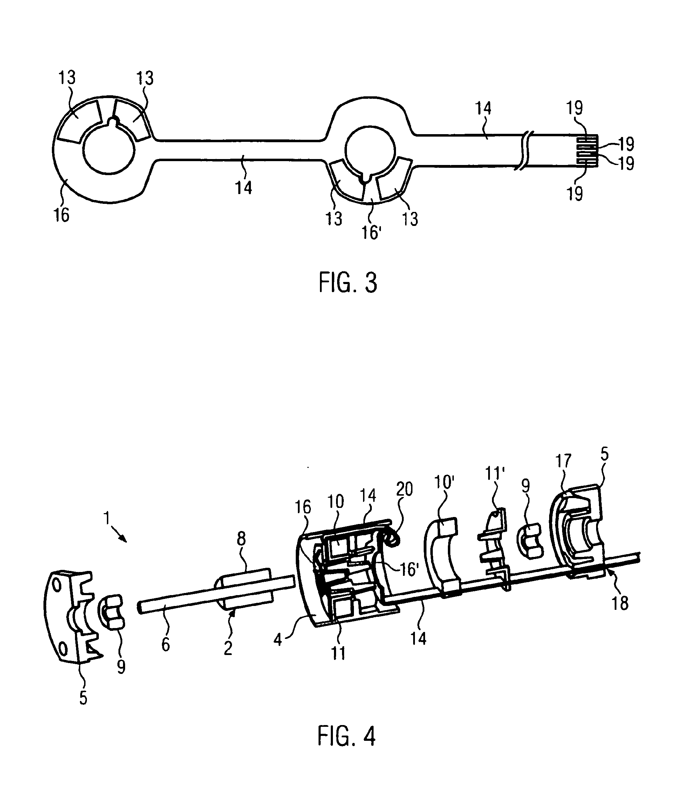

Fig. 3 zeigt die als länglicher Streifen ausgeführte flexible Leiterfolie 14 im abgewickelten Zustand vor Montage des erfindungsgemäßen Klauenpolmotors 1. Als Leiterfoliensubstrat ist hier Polyimid verwendet. Die beiden Anschlussbereiche 16 und 16' umfassen jeweils zwei Wicklungsanschlusskontakte 13, die ihrerseits wiederum über jeweils eine nicht dargestellte Leiterbahn der Leiterfolie 14 mit einem der vier externen Anschlusskontakte 19 verbunden sind. Die als länglicher Streifen ausgebildete Leiterfolie 14 ist daher zwischen den beiden Anschlussbereichen 16 und 16' etwas schmäler, da in diesem Bereich lediglich zwei Leiterbahnen verlaufen, wohingegen auf dem an den zweiten Anschlussbereich 16' angrenzenden Abschnitt des länglichen Streifens vier Leiterbahnen Platz finden müssen. Der Abstand der Anschlussbereiche 16 und 16' ist so gewählt, dass sich der Streifen einfach bei der Montage verformen lässt, ohne dass dabei an der Leiterfolie 14 mechanische Spannungen auftreten, die zu einer Beschädigung der Leiterbahnen oder des Leiterfoliensubstrats führen würden. Es sei angemerkt, dass der längliche Streifen im abgewickelten Zustand nicht zwingend in einer Linie verlaufen muss. Das im dargestellten Fall an den zweiten Anschlussbereich 16' angrenzende freie Ende des länglichen Streifens könnte alternativ beispielsweise auch in einem beliebigen Winkel vom zweiten Anschlussbereich 16' abzweigen. So wäre es zum Beispiel denkbar, dass das freie Ende des länglichen Streifens der Leiterfolie 14 vom zweiten Anschlussbereich 16' senkrecht nach oben oder nach unten weitergeführt wird. Im Gegensatz zum dargestellten linearen Verlauf würde dies dazu führen, dass das freie Ende im fertig montierten Zustand des erfindungsgemäßen Elektrokleinmotors 1 in Umfangsrichtung des Gehäuses 4 um 90° versetzt positioniert wäre.

Fig. 4 zeigt eine Explosionsansicht des Längsschnitts aus Fig. 1. Auch hier sind die einzelnen Bauteile des erfindungsgemäßen Klauenpolmotors jeweils geschnitten dargestellt. Das Motorgehäuse ist einteilig mittels Metallpulverspritzgießen (Metal Injection Molding, MIM) gefertigt. Durch die Verwendung der erfindungsgemäßen Leiterfolie 14 kann eine einfache und automatisierbare Montage des Klauenpolmotors 1 erreicht werden. Dazu werden die Statorwicklungen 10 und 10' mittels einer Montagehilfe auf eine Seite des jeweils zugehörigen Polzahnkranzes 11 bzw. 11' aufgeklebt. Mittels einer weiteren Montagehilfe werden die kreisringförmigen Anschlussbereiche 16 und 16' der flexiblen Leiterfolie 14 auf die jeweils andere Seite der Polzahnkränze 11 und 11' geklebt. Die in Fig. 2 dargestellten Abzapfungen 12 der Statorwicklungen 10 und 10' werden sodann auf die dafür vorgesehenen Wicklungsanschlusskontakte 13 der Leiterfolie 14 gelötet. Der Stator 3 des erfindungsgemäßen Elektrokleinmotors 1 ist dadurch in wenigen Arbeitsschritten montiert und elektrisch kontaktiert. Die beiden Statorwicklungspakete, jeweils bestehend aus Polzahnkranz 11 bzw. 11', Statorwicklung 10 bzw. 10' und zugehörigem Anschlussbereich 16 bzw. 16', können darauf in das Gehäuse 4 eingelegt und ausgerichtet werden. Die als länglicher Streifen ausgebildete Leiterfolie 14 wird dazu in die richtige Form gebogen, und das freie Ende des länglichen Streifens durch den Schlitz 18 im rechten Gehäusedeckel 5 geschoben. Eine genaue Ausrichtung des rechten Gehäusedeckels 5 ist dabei wichtig, damit der als Schlaufe 20 ausgebildete überstehende Teil des länglichen Streifens der Leiterfolie 14 in der dafür vorgesehenen Vertiefung 17 des rechten Gehäusedeckels 5 untergebracht werden kann, und gleichzeitig der Schlitz 18 die richtige Position zur Durchführung des freien Endes der Leiterfolie 14 aufweist. Anschließend erfolgt die Montage des Rotors 2, sowie der beiden Gehäusedeckel 5.

Es wird darauf hingewiesen, dass die erfindungsgemäße Leiterfolie auch die Realisierung eines Elektromotors mit mehr als zwei Statorwicklungen zulässt. Dazu werden entsprechend mehr Anschlussbereiche auf der als länglicher Streifen ausgebildeten Leiterfolie 14 vorgesehen. Der längliche Streifen verläuft dabei von der ersten Statorwicklung außerhalb des Motorgehäuses zur zweiten Statorwicklung, von dort auf der gegenüberliegenden Seite wiederum außerhalb des Gehäuses zur dritten Statorwicklung und derart weiter bis zur letzten Statorwicklung und von dort durch den Gehäusedeckel.

Die Realisierung des elektrischen Anschlusses mittels einer erfindungsgemäßen Leiterfolie ist natürlich nicht beschränkt auf Klauenpolmotoren, sondern kann auch auf andere Motortypen übertragen werden.

## Patentansprüche

1. Elektrokleinmotor (1), insbesondere Klauenpolmotor, mit einem Gehäuse (4), einem Stator (3), der zumindest zwei Statorwicklungen (10, 10') sowie jeweils einen Polzahnkranz (11, 11') pro Statorwicklung (10, 10') umfasst, einem Rotor (2) mit einer Drehachse (7), und einer flexiblen Leiterfolie (14) für den elektrischen Anschluss der Statorwicklungen (10, 10'), wobei die Leiterfolie (14) Wicklungsanschlusskontakte (13), externe Anschlusskontakte (19) sowie Leiterbahnen zwischen Wicklungsanschlusskontakten (13) und externen Anschlusskontakten (19) aufweist, und wobei Abzapfungen (12) der Statorwicklungen (10, 10') die Wicklungsanschlusskontakte (13) elektrisch kontaktieren, wobei ferner die Leiterfolie (14) als länglicher Streifen mit zumindest zwei beabstandet voneinander angeordneten Anschlussbereichen (16, 16') mit Wicklungsanschlusskontakten (13) ausgebildet ist, wobei die Anschlussbereiche (16, 16') an unterschiedlichen Positionen in axialer Richtung des Elektrokleinmotors (1) angeordnet sind und jeweils zum elektrischen Anschluss unterschiedlicher Statorwicklungen (10, 10') dienen, **dadurch gekennzeichnet, dass** in axialer Richtung auf der einen Seite jedes Polzahnkranzes (11, 11') jeweils ein Anschlussbereich (16, 16') der Leiterfolie (14) und auf der anderen Seite des Polzahnkranzes (11, 11') jeweils eine Statorwicklung (10, 10') angeordnet sind, wobei die Abzapfungen (12) der jeweiligen Statorwicklung (10, 10') durch Öffnungen des Polzahnkranzes (11, 11') hindurch auf die Seite des zugehörigen Anschlussbereichs (16, 16') geführt sind.

2. Elektrokleinmotor (1) nach Anspruch 1, **dadurch gekennzeichnet, dass** die Anschlussbereiche (16, 16') senkrecht zur Drehachse (7) ausgerichtet und im Wesentlichen kreisringförmig ausgebildet sind, wobei der Rotor (2) von den kreisringförmigen Anschlussbereichen (16, 16') umschlossen ist.

3. Elektrokleinmotor (1) nach einem der Ansprüche 1 oder 2, **dadurch gekennzeichnet, dass** die Leiterfolie (14) genau zwei Anschlussbereiche (16, 16') umfasst.

4. Elektrokleinmotor (1) nach Anspruch 3, **dadurch gekennzeichnet, dass** der Streifen zwischen den Anschlussbereichen (16, 16') zumindest teilweise außen am Gehäuse (4) entlang verläuft.

5. Elektrokleinmotor (1) nach Anspruch 4, **dadurch gekennzeichnet, dass** das Gehäuse (4) an der Außenseite jeweils eine Nut (15) oder Abflachung zur Aufnahme des Streifens aufweist.

6. Elektrokleinmotor (1) nach einem der Ansprüche 1 bis 5, **dadurch gekennzeichnet, dass** das Gehäuse (4) an beiden Enden durch einen Gehäusedeckel (5) verschlossen ist, wobei zumindest einer der Gehäusedeckel (5) eine kammerartige Vertiefung (17) zur Aufnahme einer überstehenden Schlaufe (20) des Streifens aufweist.

7. Elektrokleinmotor (1) nach einem der Ansprüche 1 bis 6, **dadurch gekennzeichnet, dass** die externen Anschlusskontakte (19) an einem Ende des Streifens angeordnet sind.

8. Elektrokleinmotor (1) nach Anspruch 7, **dadurch gekennzeichnet, dass** das Ende durch einen Schlitz (18) in einem der beiden Gehäusedeckel (5) in axialer Richtung herausgeführt ist.

9. Elektrokleinmotor (1) nach einem der Ansprüche 1 bis 8, **dadurch gekennzeichnet, dass** das Trägermaterial der Leiterfolie (14) Polyimid ist.

10. Elektrokleinmotor (1) nach einem der Ansprüche 1 bis 9, **dadurch gekennzeichnet, dass** die Abzapfungen (12) mit den Wicklungsanschlusskontakten (13) verlötet sind.

11. Elektrokleinmotor (1) nach einem der Ansprüche 1 bis 10, **dadurch gekennzeichnet, dass** Anschlussbereiche (16, 16') und Statorwicklungen (10, 10') mit dem jeweils zugehörigen Polzahnkranz (11, 11') verklebt sind.

12. Verfahren zu Herstellung eines Elektrokleinmotors (1) mit einem Gehäuse (4), einem Stator (3), der zumindest zwei Statorwicklungen (10, 10') sowie jeweils einen Polzahnkranz (11, 11') pro Statorwicklung (10, 10') umfasst, einem Rotor (2) mit einer Drehachse (7), und einer flexiblen Leiterfolie (14) für den elektrischen Anschluss der Statorwicklungen (10, 10'), wobei die Leiterfolie (14) Wicklungsanschlusskontakte (13), externe Anschlusskontakte (19) sowie Leiterbahnen zwischen Wicklungsanschlusskontakten (13) und externen Anschlusskontakten (19) aufweist, und wobei Abzapfungen (12) der Statorwicklungen (10, 10') die Wicklungsanschlusskontakte (13) elektrisch kontaktieren, wobei ferner die Leiterfolie (14) als länglicher Streifen mit zumindest zwei beabstandet voneinander angeordneten Anschlussbereichen (16, 16') mit Wicklungsanschlusskontakten (13) ausgebildet ist, wobei die Anschlussbereiche (16, 16') an unterschiedlichen Positionen in axialer Richtung des Elektrokleinmotors (1) angeordnet sind und jeweils zum elektrischen Anschluss unterschiedlicher Statorwicklungen (10, 10') dienen, **dadurch gekennzeichnet, dass** in axialer Richtung auf der einen Seite jedes Polzahnkranzes (11, 11') jeweils ein Anschlussbereich (16, 16') der Leiterfolie (14) und auf der anderen Seite des Polzahnkranzes (11, 11') jeweils eine Statorwicklung (10, 10') angeordnet werden, wobei die Abzapfungen (12) der jeweiligen Statorwicklung (10, 10') durch Öffnungen des Polzahnkranzes (11, 11') hindurch auf die Seite des zugehörigen Anschlussbereichs (16, 16') geführt werden, und wobei Anschlussbereiche (16, 16') und Statorwicklungen (10, 10') mit dem jeweils zugehörigen Polzahnkranz (11, 11') vor dem Einbau der Statorwicklungen (10, 10') in das Gehäuse (4) verklebt werden.

## Claims

1. A small electric motor (1), particularly a claw pole motor, comprising a housing (4), a stator (3) comprising at least two stator windings (10, 10') and one respective pole tooth rim (11, 11') per stator winding (10, 10'), a rotor (2) with a rotational axis (7), and a flexible conductor foil (14) for the electrical connection of the stator windings (10, 10'), wherein said conductor foil (14) comprises winding connection contacts (13), external connection contacts (19) and conductor paths between winding connection contacts (13) and external connection contacts (19), and wherein taps (12) of the stator windings (10, 10') electrically contact the winding connection contacts (13), wherein furthermore the conductor foil (14) is configured as an elongated strip having at least two connection portions (16, 16') arranged in spaced-apart relationship with each other and including winding connection contacts (13), wherein the connection portions (16, 16') are arranged at different positions in axial direction of the small electric motor (1), each serving the electrical connection of different stator windings (10, 10'), **characterized in that** a respective connection portion (16, 16') of the conductor foil (14) is arranged in axial direction at the one side of each pole tooth rim (11, 11') and a respective stator winding (10, 10') is arranged at the other side of the pole tooth rim (11, 11'), wherein the taps (12) of the respective stator winding (10, 10') are passed through openings of the pole tooth rim (11, 11') to the side of the associated connection portion (16, 16').

2. The small electric motor (1) according to claim 1, **characterized in that** the connection portions (16, 16') are oriented in a direction perpendicular to the rotational direction (7) and are given a substantially circular annular configuration, wherein the rotor (2) is enclosed by the circular annular connection portions (16, 16').

3. The small electric motor (1) according to any one of claims 1 or 2, **characterized in that** the conductor foil (14) comprises exactly two connection portions (16, 16').

4. The small electric motor (1) according to claim 3, **characterized in that** the strip extends between the connection portions (16, 16') at least partly on the outside along the housing (4).

5. The small electric motor (1) according to claim 4, **characterized in that** on the external side the housing (4) comprises a respective groove (15) or flattening for accommodating the strip.

6. The small electric motor (1) according to any one of claims 1 to 5, **characterized in that** the housing (4) is closed at both ends by a housing lid (5), wherein at least one of the housing lids (5) comprises a chamber-like recess (17) for accommodating a projecting loop (20) of the strip.

7. The small electric motor (1) according to any one of claims 1 to 6, **characterized in that** the external connection contacts (19) are arranged at one end of the strip.

8. The small electric motor (1) according to claim 7, **characterized in that** the end is guided through and out of a slit (18) in one of the two housing lids (5) in axial direction.

9. The small electric motor (1) according to any one of claims 1 to 8, **characterized in that** the carrier material of the conductor foil (14) is polyimide.

10. The small electric motor (1) according to any one of claims 1 to 9, **characterized in that** the taps (12) are soldered with the winding connection contacts (13).

11. The small electric motor (1) according to any one of claims 1 to 10, **characterized in that** connection portions (16, 16') and stator windings (10, 10') are adhesively bonded to the respectively associated pole tooth rim (11, 11').

12. A method for producing a small electric motor (1) comprising a housing (4), a stator (3) comprising at least two stator windings (10, 10') and one respective pole tooth rim (11, 11') per stator winding (10, 10'), a rotor (2) with a rotational axis (7), and a flexible conductor foil (14) for the electrical connection of the stator windings (10, 10'), wherein the conductor foil (14) comprises winding connection contacts (13), external connection contacts (19) and conductor paths between winding connection contacts (13) and external connection contacts (19), and wherein taps (12) of the stator windings (10, 10') electrically contact the winding connection contacts (13), wherein furthermore the conductor foil (14) is configured as an elongated strip having at least two connection portions (16, 16') arranged in spaced-apart relationship with each other and including winding connection contacts (13), wherein the connection portions (16, 16') are arranged at different positions in axial direction of the small electric motor (1), each serving the electrical connection of different stator windings (10, 10'), **characterized in that** a respective connection portion (16, 16') of the conductor foil (14) is arranged in axial direction at the one side of each pole tooth rim (11, 11') and a respective stator winding (10, 10') is arranged at the other side of the pole tooth rim (11, 11'), wherein the taps (12) of the respective stator winding (10, 10') are passed through openings of the pole tooth rim (11, 11') to the side of the associated connection portion (16, 16'), and wherein connection portions (16, 16') and stator windings (10, 10') are adhesively bonded to the respectively associated pole tooth rim (11, 11') prior to installation of the stator windings (10, 10') in the housing (4).

## Revendications

1. Petit moteur électrique (1), en particulier un moteur à pôles à griffes, comportant un boîtier (4), un stator (3) comprenant au moins deux bobinages de stator (10, 10') ainsi qu'une couronne dentée de pôle (11, 11') pour chaque bobinage de stator (10, 10'), un rotor (2) avec un axe de rotation (7), et un film conducteur flexible (14) pour la connexion électrique du bobinage de stator (10, 10'), dans lequel le film conducteur (14) comporte des contacts de connexion de bobinage (13), des contacts de connexion externes (19), ainsi que des pistes conductrices entre des contacts de connexion de bobinage (13) et des contacts de connexion externes (19), et dans lequel des dérivations (12) des bobinages de stator (10, 10') sont en contact électrique avec les contacts de connexion de bobinage (13), dans lequel le film conducteur (14) est en outre constitué sous forme de bandes allongées avec au moins deux zones de connexion espacées entre elles (16, 16') avec des contacts de connexion de bobinage (13), dans lequel les zones de connexion (16, 16') sont agencées dans différentes positions en direction axiale du petit moteur électrique (1) et servent chacune à la connexion électrique de différents bobinages de stator (10, 10'), **caractérisé en ce qu'**en direction axiale, une zone de connexion (16, 16') du film conducteur (14) est agencée d'un côté de chaque couronne dentée de pôle (11, 11') et un bobinage de stator (10, 10') est agencé de l'autre côté de chaque couronne dentée de pôle (11, 11'), dans lequel les dérivations (12) de chaque bobinage de stator (10, 10') sont menées à travers des ouvertures de la couronne dentée de pôle (11, 11') du côté de la zone de connexion correspondante (16, 16').

2. Petit moteur électrique (1) selon la revendication 1, **caractérisé en ce que** les zones de connexion (16, 16') sont dirigées perpendiculairement à l'axe de rotation (7) et agencées selon une forme essentiellement annulaire, dans lequel le rotor (2) est entouré par les zones de connexion annulaires (16, 16').

3. Petit moteur électrique (1) selon l'une des revendications 1 ou 2, **caractérisé en ce que** le film conducteur (14) comporte exactement deux zones de connexion (16, 16').

4. Petit moteur électrique (1) selon la revendication 3, **caractérisé en ce que** la bande s'étend entre les zones de connexion (16, 16') au moins partiellement à l'extérieur le long du boîtier (4).

5. Petit moteur électrique (1) selon la revendication 4, **caractérisé en ce que** le boîtier (4) comporte chaque fois une rainure (15) ou une section plane à l'extérieur pour recevoir la bande.

6. Petit moteur électrique (1) selon l'une des revendications 1 à 5, **caractérisé en ce que** le boîtier (4) est fermé à ses deux extrémités par un couvercle de boîtier (5), dans lequel au moins un des couvercles de boîtier (5) comporte un logement en forme de chambre (17) pour recevoir une boucle excédentaire (20) de la bande.

7. Petit moteur électrique (1) selon l'une des revendications 1 à 6, **caractérisé en ce que** les contacts de connexion externes (19) sont agencés à une extrémité de la bande.

8. Petit moteur électrique (1) selon la revendication 7, **caractérisé en ce que** l'extrémité ressort en direction axiale à travers une fente (18) aménagée dans un des deux couvercles de boîtier (5).

9. Petit moteur électrique (1) selon l'une des revendications 1 à 8, **caractérisé en ce que** le matériau de support du film conducteur (14) est un polyimide.

10. Petit moteur électrique (1) selon l'une des revendications 1 à 9, **caractérisé en ce que** les dérivations (12) avec les contacts de connexion de bobinage (13) sont brasées.

11. Petit moteur électrique (1) selon l'une des revendications 1 à 10, **caractérisé en ce que** des zones de connexion (16, 16') et des bobinages de stator (10, 10') sont collés à la couronne dentée de pôle correspondante (11, 11').

12. Procédé de fabrication d'un petit moteur électrique (1) comprenant un boîtier (4), un stator (3) comprenant au moins deux bobinages de stator (10, 10') ainsi qu'une couronne dentée de pôle (11, 11') pour chaque bobinage de stator (10, 10'), un rotor (2) avec un axe de rotation (7), et un film conducteur flexible (14) pour la connexion électrique du bobinage de stator (10, 10'), dans lequel le film conducteur (14) comporte des contacts de connexion de bobinage (13), des contacts de connexion externes (19), ainsi que des pistes conductrices entre des contacts de connexion de bobinage (13) et des contacts de connexion externes (19), et dans lequel des dérivations (12) des bobinages de stator (10, 10') sont en contact électrique avec les contacts de connexion de bobinage (13), dans lequel le film conducteur (14) est en outre constitué sous forme de bandes allongées avec au moins deux zones de connexion espacées entre elles (16, 16') avec des contacts de connexion de bobinage (13), dans lequel les zones de connexion (16, 16') sont agencées dans différentes positions en direction axiale du petit moteur électrique (1) et servent chacune à la connexion électrique de différents bobinages de stator (10, 10'), **caractérisé en ce qu'**en direction axiale, une zone de connexion (16, 16') du film conducteur (14) est agencée d'un côté de chaque couronne dentée de pôle (11, 11') et un bobinage de stator (10, 10') est agencé de l'autre côté de chaque couronne dentée de pôle (11, 10'), dans lequel les dérivations (12) de chaque bobinage de stator (10, 10') sont menées à travers des ouvertures de la couronne dentée de pôle (11, 11') du côté de la zone de connexion correspondante (16, 16'), et **en ce que** des zones de connexion (16, 16') et des bobinages de stator (10, 10') sont collés à la couronne dentée de pôle correspondante (11, 11') avant l'installation des bobinages de stator (10, 10') dans le boîtier (4).
